# EUROPÄISCHE PATENTANMELDUNG

(11) **EP 0 918 297 A2**
(43) Veröffentlichungstag der Anmeldung: **26.05.1999**
(21) Anmeldenummer: 98109345.3
(22) Anmeldetag: 22.05.1998
(51) Int. Cl.: G06F 17/60

(54) **Logistiksteuer- und -kontrollsystem**

(30) Priorität: 24.05.1997 DE 19721772
(71) Anmelder: Klaus Steilmann GmbH & Co. KG, 44867 Bochum (DE)
(72) Erfinder: Wessing, Michael, 45659 Recklinghausen (DE)
(74) Vertreter: Hoffmeister, Helmut, Dr. Dipl.-Phys.

(57) **Zusammenfassung**

Um bei einem Warenfluß von einem Rohwarenlager an verschiedene Zielorte Störungen beim Beladen, Entladen und darüberhinaus beim Transport zu minimieren, sind
in den Steuer-Rechner (1) die kompletten Daten wenigstens einer unter wenigstens einem Collidatenschlüssel zusammengefaßten Sendung eingebbar,
einer der Ausgabe-Rechner (3.1,...,3.8) ansteuerbar und die Daten für eine der nach wenigstens einem der Collidatenschlüssel zusammengefaßten Sendung für eine Beladung in ihn eingebbar,
mit der an dem Ausgabe-Rechner (3.1,...,3.8) angeschlossenen Collidaten-Leseeinrichtung (4.1,...,4.8) die auf einzelnen Collis angeordneten Collidatenschlüssel in den Ausgabe-Rechner (3.1,...,3.8) einlesbar, mit den eingegebenen Collidatenschlüssel vergleichbar, nicht zu dieser Sendung gehörige Collis zurückweisbar und wenigstens an den Steuer-Rechner (1) der Abschluß der Beladung wenigstens zu melden und
in den Kontroll-Rechner (2) bei Ankunft der Ladung am Zielort die Collidatenschlüssel der angekommenen Collis eingebbar und mit denen der verladenen Collis zu vergleichen.

## Beschreibung

Die Erfindung betrifft ein Logistiksteuer- und -kontrollsystem, insbesondere für einen Warenfluß von einem Rohwarenlager an verschiedene Produktionsbetriebe.

In einem großen Produktionsverbund werden von einem Rohwarenlager aus zentral an verschiedenste Produktionsbetriebe Sendungen in Form von Collis (Packstücken) zusammengestellt. Hierbei kann es vorkommen, daß Collis mit verladen werden, die nicht zur Sendung gehören. Darüber hinaus kann die Sendung zu wenige oder zu viele Collis umfassen. Ein weiteres Problem besteht darin, daß nicht immer alle Collis ihren Zielort erreichen. Jede dieser Störungen im Logistiksystem macht sich störend auf eine termingerechte Stellung der einzelnen Produkte im Produktionsverbund bemerkbar.

Aus "Automatisierung des Versandgeschäftes" in DE-Z "etz", Bd. 100, 1979, Heft 14, Seite 755 ist eine Rechner-Anlage für die Automatisierung des Versandablaufes bekannt. Sie besteht aus einem Großrechner, der mit zwei Mikrorechnern verbunden ist. Bei den Einsammelstellen steht ein Mikrocomputer als "Master", der mit Mikroprozessoren in Verbindung steht.

Ein Auftrag wird folgt gestartet:
- Lesen der Rechnungs-Nr. von einem z.B. OCR-Leser,
- Einschleusen der benötigten Kartons,
- Rechnung und Zahlkarte in den Karton einlegen und Adresse und
   Versandsatz an die Stirnwand des 1. Kartons klammern und
- Identifizierung des 1. Kartons durch Balkencodelesung und Verknüpfung der Auftrags-Nr. mit dem automatisch gelesenen Balkencode im Minicomputer sowie Überprüfung der Kartonzahl.

Der Ablauf in den Einsammelstationen seht so aus:
- Automatisches Lesen des Balkencodes am Versandkarton durch festinstallierte Leser beim Einlaufen in die Einsammelstation,
- Meldung der Balkencode-Nr. und der Stations-Nr. an den Minicomputer,
- die Informationen werden vom Minicomputer verarbeitet und an den Mikrocomputer weitergegeben, der seinerseits die Daten an den Mikroprozessor verteilt,
- Aufleuchten der der Entnahmezahl an den Leuchtanzeigen der Artikelfächer,
- manuelle Entnahme der Produkte,
- Löschung aller Anzeigen durch zentralen Quittungsknopf sowie
- automatischer Weitertransport der Kartons, automatisches Einlaufen der Kartons des neuen Auftrages in die Einsammelposition.

Die abgeschlossenen Aufträge werden geprüft, verpackt und über Förderbahnen an die Versandrampen für LKW-Transport geleitet, wobei ein Balkencodeleser an der Förderstrecke des Kartons nach den Versandrichtungen ausschleust. Der abgefertigte Auftrag wird im Minicomputer vermerkt und über Direktverbindung dem Hauptrechner mitgeteilt. Anfragen über den Status des Auftrages können jederzeit vom Hauptrechner durchgeführt werden.

Diese bekannt Lösung bezieht sich damit nur auf das automatische Packen einzelner Kartons und Ausschleusen dieser Kartons für einen LKW-Transport nach Versandrichtungen.

Aus der DE-A-4 011 944 ist ein Versand- und Auslieferungsverfahren für Waren und eine Steuerungsanlage dafür bekannt, die in zwei Teilbereiche unterteilt ist, die am Versandort und am Bestimmungsort getrennt voneinander arbeiten.

Am Versandort werden die zu versendenden Gegenstände mit Stückcode-Identifizierungs-Kenndaten versehen. Mit einem Stückcode-Leser werden die Kenndaten der einzelnen zu versendenden Gegenstände in einen Versandort-Rechner eingegeben.

Der Versandort-Rechner erstellt aus den in seiner Datensammlung angegebenen Kenndaten eine Behälter-Packaufzeichnung, die er an die Datensammlung eines Bestimmungsort-Rechners überträgt.

Am Bestimmungsort werden die Stückcode-Kenndaten der ankommenden Behälter in den Bestimmungsort-Rechner eingelesen. Der Bestimmungsort-Rechner ist mit einem Vergleicher ausgestattet, der aus den in den Computer eingegebenen Daten ermittelt, ob die am Bestimmungsort eingegangenen Gegenstände gerade zur Erfüllung eines Kundenauftrages benötigt werden.

Aus der DE-C-4 338 407 ist ein Verfahren zum Erkennen und Versenden von Artikeln aus Retouren für Single-Bestellungen, insbesondere von Bekleidungsstücken, bekannt. Hierbei werden bei Vorliegen von Single-Bestellaufträgen in von elektronischen Datenerfassungs- und -verarbeitungseinheiten gesteuerten vollautomatischen Betrieb zunächst die spezifischen Daten der eingehenden Retouren erfaßt. Danach werden die Retouren auftragsabhängig vor der Zuteilung in den Lagerbereich abgezogen und dem Versandbereich zugeführt, mit den dem jeweiligen Auftrag entsprechenden Dokumenten zusammengeführt und versandfertig gemacht. Mittels einer Etikettiermaschine werden die Transportbehälter mit zugeordneten Codierungen versehen, welche von der Etikettiermaschine über eine Datenleitung der Datenverarbeitungseinheit zugeführt werden.

Die Lösung bezieht sich lediglich auf automatische Verpacken eines oder mehrerer Gegenstände für eine Vielzahl von Bestellungen.

Es stellt sich demnach die Aufgabe, ein Logistiksteuer- und -kontrollsystem, insbesondere für einen Warenfluß von einem Rohwarenlager an verschiedene Zielorte zu schaffen, das Störungen beim Beladen, Entladen und darüber hinaus beim Transport minimiert.

Erfindungsgemäß wird diese Aufgabe durch die Merkmale des Anspruchs 1 gelöst.

Die mit der Erfindung erzielten Vorteile bestehen insbesondere darin, daß im Steuer-Rechner sämtliche Informationen für einen Beladevorgang vorhanden sind. Wird einer der Ausgabe-Rechner angesteuert, überwacht er die nach Collidaten zusammengefaßte Sendung. Durch den Vergleich der Collidatenschlüssel der zur Beladung gelangenden mit denen für die Beladung vorgesehenen Collis wird gesichert, daß die Sendung vollständig ist und insbesondere nicht zur Sendung gehörige Collis zurückgewiesen werden.

Durch den Kontroll-Rechner, der wenigstens mit dem SteuerRechner verbunden ist, wobei in den Kontroll-Rechner bei Ankunft der Ladung am Zielort die Collidatenschlüssel der ankommenden Collis eingegeben und mit denen der verladenen Collis verglichen wird, kann festgestellt werden, ob die zusammengestellte Sendung am Zielort vollständig angekommen ist.

Der Mehrrechnerverbund ermöglicht es, Rechner gleicher Konfiguration einzusetzen. Hierbei können vorzugsweise Personal-Computer, die insbesondere über eine Tastatur, Bildschirm und Drucker verfügen, eingesetzt werden. Da der Steuer-Rechner über sämtliche Informationen verfügt, die für die Be- und Entladung bzw. Kontrolle von Nöten sind, nimmt er die Stellung eines Master-Rechners ein. Demgegenüber können die Ausgabe-Rechner und selbst der Kontroll-Rechner die Rolle eines Slave-Rechners übernehmen. Die Slave-Rechner brauchen in diesem Fall nicht so komfortabel ausgerüstet sein. Die besonders wichtigen und mit hoher Zuverlässigkeit zu bearbeitenden Aufgaben beim Belade- und Entladevorgang bzw. beim Kontrollvorgang werden von den kleineren und besonders ausfallsicheren Ausgabe-Rechnern, dem "Slave" übernommen. Der größere Steuer-Rechner, der "Master" übernimmt dagegen die übergeordneten Aufgaben bzw. Aufgaben mit geringeren Zuverlässigkeitsanforderungen. Bei einer Betriebsstörung im Ausgabe-Rechner kann dann der Steuer-Rechner als Master-Rechner übernehmen.

Die Ausgabe-Rechner können nicht nur mit dem Steuer-, sondern auch mit dem Kontroll-Rechner verbunden sein. Durch die bidirektionale Verbindung des Steuer-Rechners, der Ausgabe-Rechner und des Kontroll-Rechners untereinander ist es möglich, daß die vom Steuer-Rechner überwachte Beladung einer zusammengefaßten Sendung sowohl an den Steuer- als auch an den Kontroll-Rechner gegeben wird. Hierdurch wird in beiden Fällen eine Kontrolle der Beladung und eine Kontrolle der angekommenen Ladung wesentlich erleichtert.

Die Collidatenschlüssel können sich auf einem Colliaufkleber befinden. Dieser Colliaufkleber kann insbesondere durch den Steuer-Rechner aufgeschrieben sein. Ein Aufschreiben der Colliaufkleber kann darüber hinaus durch die Ausgabe-Rechner erfolgen.

Der Collidatenschlüssel kann wenigstens eine Betriebs-Nummer, eine Colli-Nummer und eine Ladeliste aufweisen. Weitere Daten, die den Colli besonders kennzeichnen, können den Collischlüssel ergänzen. Hierdurch ist eine genaue Zuordnung der jeweiligen Collis zu einer Ladung gesichert. Darüber hinaus ist es möglich, den Colliinhalt zu identifizieren.

Mit dem Collidatenschlüssel können darüber hinaus Angaben über einen Absender, einen Empfänger, einen Inhalt mit auf den Colliaufkleber außer dem Collidatenschlüssel aufgeschrieben werden. Hierdurch ist es möglich, die einzelnen Colliaufkleber zu drucken und darüber hinaus die Warenpapiere zusammenzustellen.

Für den Collidatenschlüssel gibt es unterschiedlichste Darstellungsformen. Dies können zum einen Ziffernfolgen, vorteilhafterweise aber ein Barcode sein. Insbesondere der Barcode ermöglicht ein einfaches Steuern und Kontrollieren des Be- und Entladen bzw. Kontrollieren der eingegangenen Sendung.

Der Ausgabe-Rechner läßt sich auf unterschiedlichste Art und Weise ansteuern. Eine Ansteuerungsmöglichkeit besteht vom Steuer-Rechner aus. Die Ansteuerung kann aber auch durch eine Steuerkarte erfolgen, die in den Steuer-Rechner eingegeben wird. Hierdurch wird gesichert, daß der Steuer-Rechner angesteuert wird, an dessen Standort sich der Beladevorgang vollziehen soll. Darüber hinaus wird die Person, die den Beladevorgang vornimmt, kontrolliert. Hierdurch ist nicht nur eine genaue Kontrolle der einzelnen Collis und deren Inhalt, sondern auch der für den Beladevorgang verantwortlichen Person gesichert.

Ein Ausführungsbeispiel der Erfindung ist in der Zeichnung dargestellt und wird im folgenden näher beschrieben. Es zeigen:
- Fig. 1: eine Blockschaltbild eines Logistiksteuer- und -kontrollsystems,
- Fig. 2: einen Colliaufkleber für ein Logistiksteuer- und -kontrollsystem gemäß Fig. 1,
- Fig. 3: einen weiteren Colliaufkleber für ein Logistiksteuer- und -kontrollsystem gemäß Fig. 1,
- Fig. 4: eine Steuerkarte für ein Logistiksteuer- und -kontrollsystem gemäß Fig. 1,
- Fig. 5: eine weitere Steuerkarte für ein Logistiksteuer- und -kontrollsystem gemäß Fig. 1 und
- Fig. 6: einen Collibogen eines Logistiksteuer- und -kontrollsystem gemäß Fig. 1.

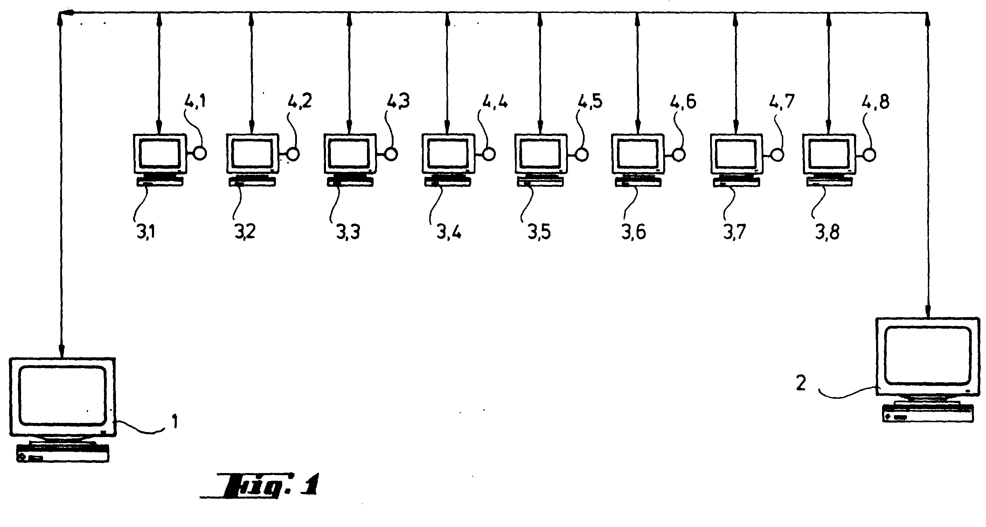

In Fig. 1 ist ein Blockschaltbild eines Logistiksteuer- und -kontrollsystems gezeigt. Es besteht aus einem Steuer-Rechner 1, der mit parallel zueinander liegenden Ausgabe-Rechnern 3.1, ... 3.8 bidirektional verbunden ist. Mit dem Steuer-Rechner 1 und den Ausgabe-Rechnern 3.1, ... ist ebenfalls bidirektional ein Kontroll-Rechner 2 verbunden.

Der Steuer-Rechner 1, der Kontroll-Rechner 2 und die Ausgabe-Rechner 3.1, ... 3.8 sind als Personal-Computer ausgebildet. Sie umfassen wenigstens ein Rechenwerk mit eingebbarer Diskette, CD oder dergleichen, einer Tastatur, einem Bildschirm und einem Drucker.

An jedem der Ausgaberechner 3.1, ... 3.8 ist eine Collidaten-Leseeinrichtung 4.1, ... 4.8 verbunden. Die Collidaten-Leseeinrichtung 4.1, ... 4.8 ist als Scanner ausgebildet. Auch andere Leseeinrichtungen, die auf anderer Basis arbeiten, sind als Collidaten-Leseeinrichtung einsetzbar.

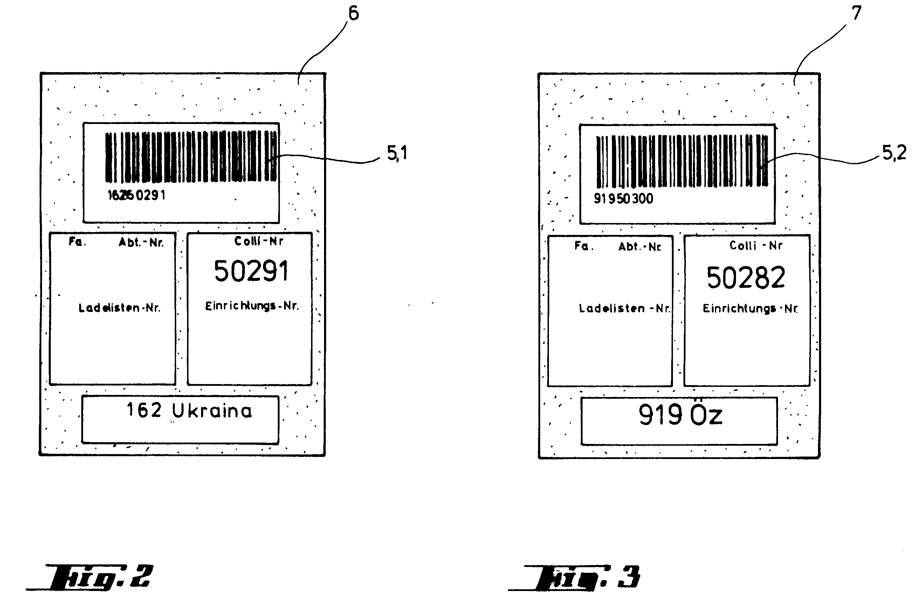

In den Fig. 2 und 3 ist jeweils ein Colliaufkleber 6, 7 gezeigt. Sie sind für die einzelnen Produktionsländer farbig gestaltet. So ist der Colliaufkleber 6 für die Ukraine fliederfarben und der für die Türkei blau. So gibt bereits die jeweilige Farbe optisch das jeweilige Bestimmungsland wieder. Wesentlicher Bestandteil der Colliaufkleber 6, 7 ist der Collidatenschlüssel 5.1, 5.2. Er stellt einen achtstelligen Barcode dar und verbirgt in sich eine Betriebsnummer (die ersten drei Stellen) und eine fortlaufende Collinummer (die folgenden fünf Stellen). Die Collinummer ist im Barcode immer rechtsbündig.

Der Nummernkreis stellt sich wie folgt dar:
0000 und 1 bis 4 9999 ist immer ein Oberstoffcolli
5 0000 bis 8 9999 ist immer ein Zutatencolli
9 0000 bis 9 9999 ist immer ein Zubehör (Bügel, Hüllen, Ausstattungscolli, Maschinen usw.).

Auf den Colliaufklebern 6, 7 sind unterhalb des Collidatenschlüssels 5.1, 5.2 im linken Feld Angaben über den Absender, wie Firmen- und Abteilungsnummer und darunter über den Inhalt in Form einer Ladelistennummer ausgeschrieben. Die Ladelistennummer gibt an, zu welcher Sendung der Colli gehört. Im Feld daneben wird die Collinummer eingeschrieben. Die Collinummer gibt Auskunft über den Inhalt des Collis. Darunter sind zusätzliche Angaben über den Colliinhalt und weitere Informationen zu entnehmen. Unterhalb dieser beiden Felder sind Angaben über den Empfänger ausgedruckt. Hierbei wird das Empfängerland ausgeschrieben bzw. die Betriebsnummer speziell angegeben.

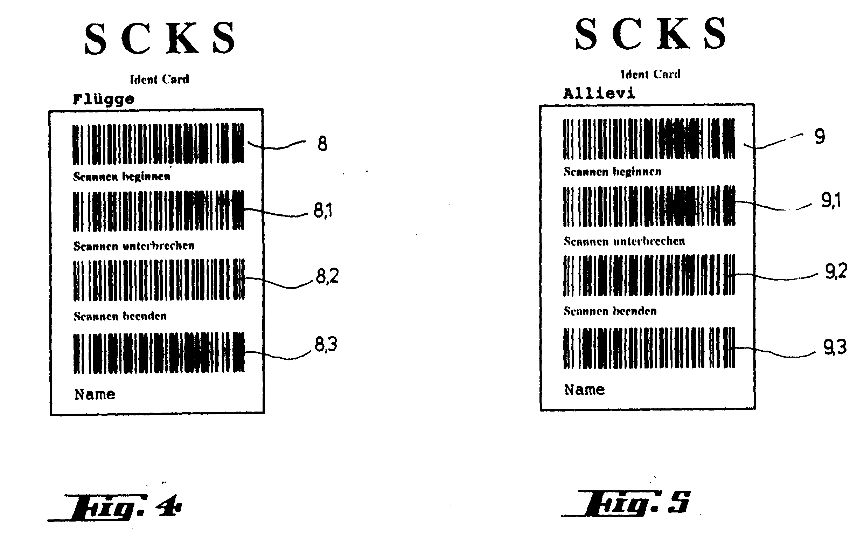

In den Fig. 4 und 5 sind Steuerkarten 8 bzw. 9 gezeigt. Sie sind als Identkarten ausgebildet. Die mit 8,0 bzw. 9,0 bezeichneten Barcodefelder sind als Identfeld ausgebildet und geben Auskunft über den jeweiligen Besitzer der Steuerkarte 8, 9. Darunter liegt ein Startfeld 8.1 bzw. 9.1. Unter dem Startfeld ist ein Unterbrechungsfeld 8.2 bzw. 9.2 und unter diesem ein Stoppfeld 8.3, 9.3 angeordnet. Das Stoppfeld 8.3 bzw. 9.3 gibt Auskunft darüber, daß der Scannvorgang beendet worden ist.

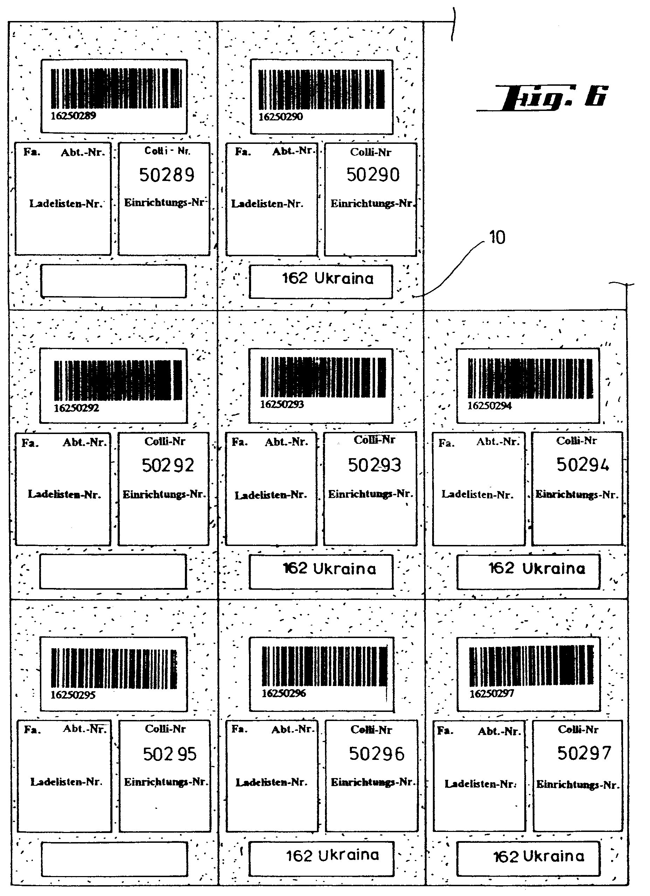

In Fig. 6 ist ein Collibogen 10 dargestellt. Er besteht aus einer Vielzahl von Colliaufklebern 6, wie sie in Fig. 2 dargestellt sind. Die einzelnen Collidatenschlüssel sind auch hier als Barcode bzw. Zifferncode dargestellt. Die jeweiligen Collinummern sind im rechten Feld unter dem Collidatenschlüssel auch hier in größeren Ziffern fortlaufend in arabischen Ziffern ausgeschrieben.

Der Einsatz und die Arbeitsweise des Logistiksteuer- und -kontrollsystems, wie es sich aus dem dargestellten Ausführungsbeispiel ergibt, sei erläutert:

Der Steuer-Rechner 1 wird an zentraler Stelle und die Ausgabe-Rechner 3.1, ... 3.8 mit ihren Collidaten-Leseeinrichtungen 4.1, ... 4.8 an den einzelnen Verladetoren eines Rohwarenlagers installiert. Der Controllrechner 2 kann dabei ebenfalls an den Standort, an dem die übrigen Rechner 1, 3.1, ... installiert sind, aufgestellt werden. Es ist aber auch eine Aufstellung des Kontroll-Rechners am Standort eines Produktionsbetriebes möglich.

Für die an den jeweiligen Standorten befindlichen Produktionsbetriebe werden die jeweiligen Sendungen zusammengefaßt. Zu einer Sendung gehören in etwa 200 Collis. Allein für die Herstellung eines Sakkos werden 25 bis 30 unterschiedliche Artikel benötigt. In Abhängigkeit von der Größe des Betriebes können jährlich 400.000 bis 800.000 Collis (Packstücke) zur Versendung kommen. Diese einzelnen Sendungen werden zusammengefaßt und in den Steuer-Rechner 1 eingegeben. Der Steuer-Rechner 1 kann dabei nach Zusammenstellung der jeweiligen Sendung die in Fig. 6 dargestellten Collibogen 10 ausdrucken. Die Collibogen 10 enthalten, wie bereits beschrieben, die einzelnen Colliaufkleber 6 bzw. 7. Diese sind an der Rückseite mit einer Klebefläche versehen. Mit dieser Klebefläche werden sie auf den zugehörigen Colli aufgeklebt.

Der Ablauf einer Lkw-Beladung wird wie folgt vorgenommen: Der Lkw rangiert an eines der freien Verladetore, an dem die Ausgabe-Rechner 3.1 mit der Collidaten-Leseeinrichtung 4.1 installiert ist. Der Warenausgang, an dem der Steuer-Rechner 1 steht, gibt die Beladung für diesen Ausgabe-Rechner 3.1 frei. Der verantwortliche Belade-Mitarbeiter gibt seine Steuerkarte 8, wie sie in Fig. 4 gezeigt ist, mit seinem Identfeld 8.0 in den Ausgabe-Rechner 3.1 ein. Weiterhin aktiviert er mit dem Startfeld 8.1 den Befehl "Scannen beginnen" den für diese Beladung vorgesehenen Speicher. Danach werden alle zu dieser Sendung gehörenden Collis mit Hilfe der Collidaten-Leseeinrichtung 4.1 anhand der Collidatenschlüssel 5.1 mit den Collinummern erfaßt. Sind alle Collis komplett verladen, wird mit dem Stoppfeld 8.3 durch den verantwortlichen Belade-Mitarbeiter die Beladung mit dem Befehl "Scannen beenden" abgeschlossen. Machen sich während des Beladevorganges Unterbrechungen erforderlich, ist dieses mit dem Unterbrechungsfeld 8.2 möglich.

Die beim Verladen mit der als Scanner ausgebildeten Collidaten-Leseeinrichtung 4.1 aufgenommenen Collidatenschlüssel werden mit dem Collidatenschlüssel 5.1 verglichen. Liegt Identität vor, wird die Beladung freigegeben. Liegt keine Identität vor, werden die falschen Collis zurückgewiesen. Die zusammengefaßte und geladene Sendung wird an den Steuer-Rechner 1 gegeben. Der Steuer-Rechner kann ein Be- und Entladeprotokoll ausdrucken. Dieses wird dem empfangenen Produktionsbetrieb mit den Betriebspapieren bei der Anlieferung zur Verfügung gestellt. Weitere Durchschläge erhalten der Spediteur und weitere betriebliche Stellen.

Das Be- und Entladeprotokoll ist zugleich ein Beleg, der vom Produktionsbetrieb zur Kontrolle der Anlieferung benutzt werden muß, um die Anlieferung zu dokumentieren. Im Produktionsbetrieb wird die Vollzähligkeit oder das Fehlen oder die Übersendung falscher Kollis anhand der Kollinummern festgestellt. Diese Daten werden in den Kontrollrechner 2 eingegeben und mit den Ausgabedaten verglichen. Der Vergleich kann entweder im Kontroll-Rechner 2 oder auch im Steuer-Rechner 1 erfolgen. Das Logistiksteuer- und -kontrollsystem ermöglicht es bei fehlenden Collis sofort und gezielt diese nochmals zusammenzustellen und an den jeweiligen Produktionsbetrieb nachzusenden.

Die programmtechnische Zusammensetzung und Kontrolle einer Ladung vom Ursprungsort bis hin zum Empfängerziel ermöglicht es, jeden Artikel vom Rohwarenlager über den verantwortlichen Spediteuer bis hin zur Produktionsstätte zu verfolgen. Auftretende Schwächen im Logistiksystem können so schnell und sicher maschniell aufgespürt werden und Störungen im Produktions- und Fertigungsablauf auf ein Minimum herabgesetzt werden.

## Patentansprüche

1. Logistiksteuer- und -kontrollsystem, insbesondere für einen Warenfluß von einem Rohwarenlager an verschiedene Produktionsbetriebe, mit wenigstens folgenden Systemkomponenten:
einem Mehrrechnerverbund aus wenigstens
- einem Steuer-Rechner (1),
- wenigstens einem Ausgabe-Rechner (3.1, ..., 3.8), an dem eine Collidaten-Leseeinrichtung (4.1, ..., 4.8) angeordnet und der mit dem Steuer-Rechner (1) verbunden ist, und
- wenigstens einen Kontroll-Rechner (2), der wenigstens mit dem Steuer-Rechner (1) verbunden ist, wobei
a) in den Steuer-Rechner (1) die kompletten Daten wenigstens einer unter wenigstens einem Collidatenschlüssel (5.1, 5.2) zusammengefaßten Sendung eingebbar sind,
b) einer der Ausgabe-Rechner (3.1, ..., 3.8) ansteuerbar und die Daten für eine der nach wenigstens einem der Collidatenschlüssel (5.1, 5.2) zusammengefaßten Sendung für eine Beladung in ihn eingebbar sind,
c) mit der an dem Ausgabe-Rechner (3.1, ..., 3.8) angeschlossenen Collidaten-Leseeinrichtung (4.1, ..., 4.8) die auf einzelnen Collis angeordneten Collidatenschlüssel (5.1, 5.2) in den Ausgabe-Rechner (3.1, ..., 3.8) einlesbar, mit den eingegebenen Collidatenschlüssel vergleichbar, nicht zu dieser Sendung gehörige Collis zurückweisbar und wenigstens an den Steuer-Rechner (1) der Abschluß der Beladung wenigstens zu melden ist und
d) in den Kontroll-Rechner (2) bei Ankunft der Ladung am Zielort die Collidatenschlüssel (5.1, 5.2) der angekommenen Collis eingebbar und mit denen der verladenen Collis vergleichbar ist.

2. System nach Anspruch 1, dadurch gekennzeichnet, daß die Ausgabe-Rechner (3.1, ..., 3.8) mit dem Steuer- und dem Kontroll-Rechner (1, 2) verbunden sind.

3. System nach einem der Ansprüche 1 oder 2, dadurch gekennzeichnet, daß die Collidatenschlüssel (5.1, 5.2) auf wenigstens einen Colliaufkleber (6, 7), insbesondere durch den Steuer-Rechner (1) aufgeschrieben sind.

4. System nach einem der Ansprüche 1 bis 3, dadurch gekennzeichnet, daß der Collidatenschlüssel (5.1, 5.2) wenigstens eine Betriebs- und eine Colli-Nummer sowie eine Ladeliste aufweist.

5. System nach einem der Ansprüche 1 bis 4, dadurch gekennzeichnet, daß mit dem Collidatenschlüssel (5.1, 5.2) Angaben über einen Absender, einen Empfänger, einen Inhalt mit auf die Colliaufkleber (6, 7) aufgeschrieben sind.

6. System nach einem der Ansprüche 1 bis 5, dadurch gekennzeichnet, daß der Collidatenschlüssel (5.1, 5.2) als Barcode geschrieben ist.

7. System nach einem der Ansprüche 1 bis 6, dadurch gekennzeichnet, daß die Ausgabe-Rechner (3.1, ..., 3.8) mit einer Steuerkarte (8, 9) ansteuerbar ist.
